(19) Europäisches Patentamt
European Patent Office
Office européen des brevets

(11) **EP 4 722 079 A1**

(12) **EUROPEAN PATENT APPLICATION**
published in accordance with Art. 153(4) EPC

(43) Date of publication:
**08.04.2026 Bulletin 2026/15**

(21) Application number: **23938520.6**

(22) Date of filing: **25.05.2023**

(51) International Patent Classification (IPC):
*B62D 6/00* (2006.01)     *B62D 5/04* (2006.01)
*B62D 101/00* (2006.01)     *B62D 111/00* (2006.01)

(52) Cooperative Patent Classification (CPC):
**B62D 6/007; B62D 5/0457; B62D 5/0481**

(86) International application number:
**PCT/JP2023/019434**

(87) International publication number:
**WO 2024/241557 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Mitsubishi Electric Mobility
Corporation
Tokyo 100-8310 (JP)**

(72) Inventors:
• **ORII, Masahiko**
**Tokyo 100-8310 (JP)**
• **TANAKA, Kenta**
**Tokyo 100-8310 (JP)**
• **MASUI, Ryota**
**Tokyo 100-8310 (JP)**

(74) Representative: **Hoffmann Eitle
Patent- und Rechtsanwälte PartmbB
Arabellastraße 30
81925 München (DE)**

(54) **INPUT/OUTPUT DEVICE, METHOD FOR MANUFACTURING VEHICLE , AND PROGRAM**

(57) An input/output device according to the present disclosure includes: a control constant holding unit configured to hold a first control constant corresponding to a first vehicle state value; a target characteristic setting unit configured to set a second target characteristic which is a target value of a control characteristic of the steering in a second vehicle state value different from the first vehicle state value; and a control constant calculation unit configured to calculate a second control constant corresponding to the second vehicle state value based on the first control constant and the second target characteristic and output the second control constant to the steering control device.

FIG. 2

EP 4 722 079 A1

# Description

Technical Field

The present disclosure relates to an input/output device, a method for manufacturing a vehicle, and a program.

Background Art

Patent Document 1 discloses a technology for setting a plurality of control parameters regarding steering of a vehicle according to individual users. Specifically, a good control parameter is estimated and presented based on an evaluation value given by the user for the result of the control.

Patent Document 2 discloses a technology of performing control using a plurality of controllers (a phase advance compensator, a phase delay compensation unit, and the like) regarding steering of a vehicle.

Citation List

Patent Documents

Patent Document 1: Japanese Unexamined Patent Application, First Publication No. 2008-210291
Patent Document 2: Japanese Unexamined Patent Application, First Publication No. 2002-29433

Summary of Invention

Problem to be Solved by the Invention

In a steering control device, it is necessary to set a control constant corresponding to a vehicle state value such as vehicle speed. In a case where an appropriate control parameter (control constant) corresponding to the vehicle state value is not set, there is a possibility that control characteristics deteriorate with the transition of the vehicle state value. The disclosure of Patent Document 1 does not consider the transition of the vehicle state value. In addition, as shown in Patent Document 2, the control of the steering is executed by a plurality of controllers. In other words, it is necessary to set an appropriate control constant for each controller in consideration of the transition of the vehicle state value. Conventionally, such a setting is performed by an operator, and a problem of a number of increasing man-hours required for setting work exists.

In view of the aforementioned problem, an object of the present disclosure is to provide an input/output device, a method for manufacturing a vehicle, and a program capable of reducing required man-hours for setting a control constant that takes a transition of a vehicle state value into account.

Means to Solve the Problem

According to an aspect of the present disclosure, an input/output device for setting a control constant corresponding to a plurality of vehicle state values of a steering control device that controls a steering mounted on a vehicle, the input/output device includes: a control constant holding unit configured to hold a first control constant corresponding to a first vehicle state value, a target characteristic setting unit configured to set a second target characteristic which is a target value of a control characteristic of the steering in a second vehicle state value different from the first vehicle state value, and a control constant calculation unit configured to calculate a second control constant corresponding to the second vehicle state value based on the first control constant and the second target characteristic and output the second control constant to the steering control device.

According to another aspect of the present disclosure, a method for manufacturing a vehicle, includes: a step of inputting the second control constant to the steering control device using the input/output device.

According to yet another aspect of the present disclosure, a program causing a computer to execute: a step of holding a first control constant corresponding to a first vehicle state value, a step of setting a second target characteristic which is a target value of a control characteristic of steering in a second vehicle state value different from the first vehicle state value, a step of calculating a second control constant corresponding to the second vehicle state value based on the first control constant and the second target characteristic, and a step of outputting the second control constant.

Effects of the Invention

According to the present disclosure, it is possible to provide an input/output device, a method for manufacturing a vehicle, and a program capable of reducing the required number of man-hours for setting a control constant that takes transition of a vehicle state value into account.

Brief Description of Drawings

[FIG. 1] A schematic diagram showing an example of a usage state of an input/output device according to a first embodiment.
[FIG. 2] A block diagram showing an example configuration of the input/output device and a steering control device of FIG. 1.
[FIG. 3] A control constant matrix according to the first embodiment.
[FIG. 4] A display example of target characteristics in a table format according to the first embodiment.
[FIG. 5] A board diagram showing a problem to be solved by the present disclosure.

[FIG. 6] A block diagram showing an example configuration of a target characteristic setting unit according to the first embodiment.

[FIG. 7] A display example of target characteristics in a map format according to the first embodiment.

[FIG. 8] A display example of target characteristic according to a modification example of FIG. 7.

[FIG. 9] A control constant matrix according to a modification example of the first embodiment.

[FIG. 10] A block diagram showing an example configuration of an input/output device according to a second embodiment.

[FIG. 11] A block diagram showing an example configuration of a target characteristic setting unit according to the second embodiment.

[FIG. 12] A control constant matrix according to Third embodiment.

[FIG. 13] A control constant matrix according to a modification example of Third embodiment.

Description of Embodiments

Hereinafter, embodiments of the present disclosure is explained with reference to the drawings. The scope of the present disclosure is not limited to the following embodiments, and may be changed in any manner so long as said changes are within the technical scope of the present disclosure.

First Embodiment

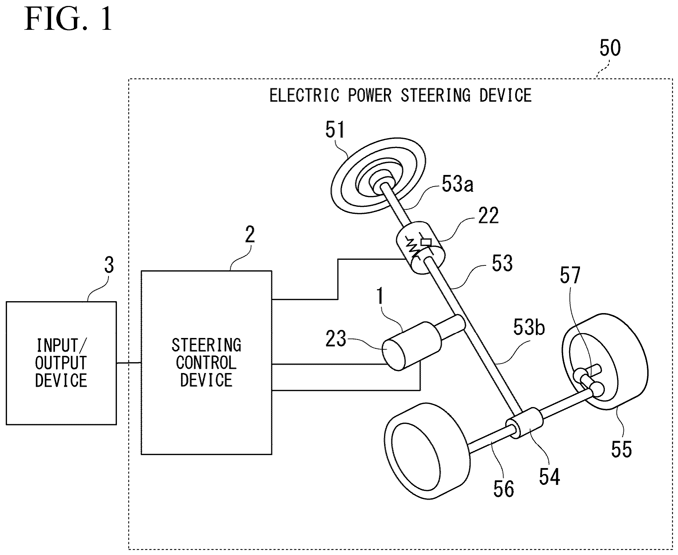

FIG. 1 is a schematic diagram showing an example of a usage state of an input/output device 3 according to a first embodiment. As shown in FIG. 1, the input/output device 3 is connected to an electric power steering device 50. The input/output device 3 and the electric power steering device 50 may be connected in a wired manner or in a wireless manner. The connection between the input/output device 3 and the electric power steering device 50 may be performed, for example, via an in-vehicle communication network mounted on a vehicle. The in-vehicle communication network may be, for example, a controller area network (CAN) (registered trademark), FlexRay (registered trademark), or Ethernet (registered trademark).

The electric power steering device 50 includes a rotation machine 1, a steering control device 2, a torque detection device 22, a rotation detection device 23, a steering wheel 51, a steering shaft 53, a rack and pinion gear 54, a wheel 55, a tie rod 56, and a knuckle arm 57. The electric power steering device 50 is mounted on a vehicle.

The steering shaft 53 includes an input shaft 53a and an output shaft 53b. The input shaft 53a is connected to the steering wheel 51. The output shaft 53b is connected to the rack and pinion gear 54. The input shaft 53a and the output shaft 53b are connected to each other by a torsion bar (not shown). The torsion bar is disposed in the torque detection device 22 and penetrates the torque detection device 22 in the axial direction. Hereinafter, the steering wheel 51, the steering shaft 53, and the torsion bar may be collectively referred to as "steering".

When a driver steers the steering wheel 51, steering torque is applied to the input shaft 53a. Twist that is almost entirely proportional to the steering torque is generated in the torsion. The torque detection device 22 detects the twist angle (twist direction and amount of twist) applied to the torsion bar. The torque detection device 22 converts the detected twist angle into a steering torque signal Ts. The rotation detection device 23 is attached to a rotation shaft of the rotation machine 1. The rotation detection device 23 detects rotation speed of the rotation shaft and outputs a rotation speed signal $\omega m$.

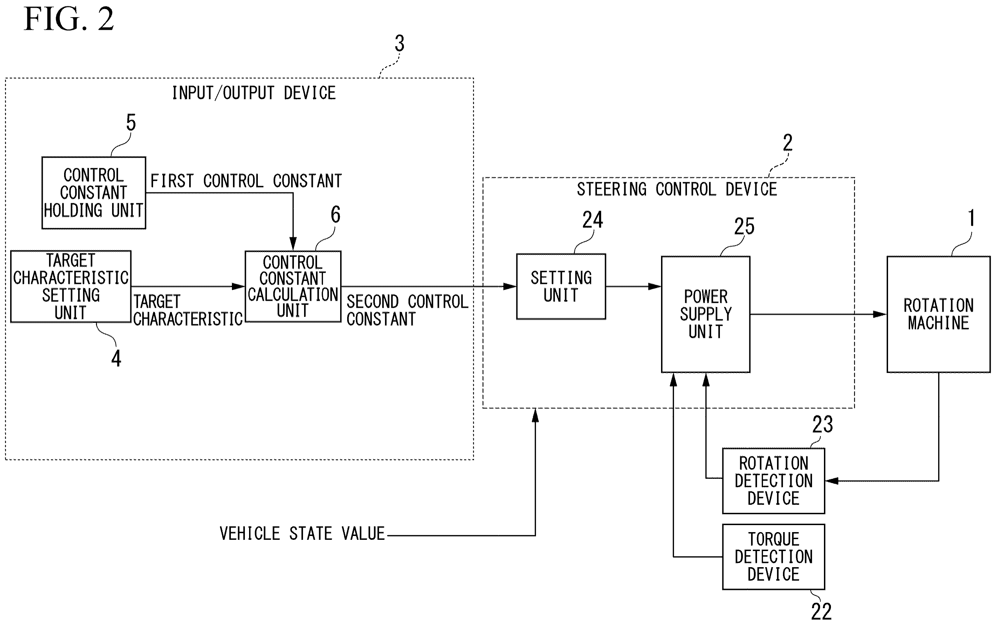

The rotation machine 1 generates a driving force (steering assist force) for steering, and assists the driver with steering. The steering control device 2 controls the rotation machine 1. FIG. 2 shows an example configuration of the steering control device 2 and the input/output device 3. The steering control device 2 includes a setting unit 24 and a power supply unit 25. The setting unit 24 sets the control constant used for the calculation in the power supply unit 25 based on the vehicle state value and the control constant transmitted from the input/output device 3.

The term "vehicle state value" is a parameter related to the operation of the vehicle. The vehicle state value is, for example, vehicle speed. The vehicle state value is input to the steering control device 2 from various detection devices provided in the vehicle. For example, in a case where the vehicle state value is the vehicle speed, information related to the vehicle speed is input to the steering control device 2 from a detection device that detects the vehicle speed.

The rotation speed (rotation speed signal $\omega m$) of the rotation machine 1 detected by the rotation detection device 23 is input to the power supply unit 25. In addition, the steering torque (steering torque signal Ts) detected by the torque detection device 22 is input to the power supply unit 25. The power supply unit 25 generates a voltage to be applied to the rotation machine 1 based on the control constant set by the setting unit 24, the rotation speed signal $\omega m$, the steering torque signal Ts, and the like.

The input/output device 3 includes a target characteristic setting unit 4, a control constant holding unit 5, and a control constant calculation unit 6. Examples of the hardware constituting the input/output device 3 include a tablet computer or a laptop PC. The target characteristic setting unit 4 sets the target characteristic of the steering corresponding to the vehicle state value. The term "target characteristic" is a target value of a control characteristic of steering with respect to the vehicle state value.

The target characteristic may be related to, for example, a transmission characteristic representing a magnitude of the driving force of the rotation machine 1 with respect to the output of the various detection devices. The target characteristic may be related to performance of suppressing noise or detection error included in various detection devices. The target characteristic may be related to performance of suppressing the disturbance vibration transmitted to the driver through the steering. The target characteristic may be related to responsiveness of steering with respect to steering of the driver. The target characteristic may be related to the stability of the various performances described above. The target characteristic may be related to a characteristic of the feedback control executed by the power supply unit 25. The target characteristic may be related to one or a plurality of the above-described examples, or may be related to other characteristics.

(Definition of Terms)

Here, definitions of terms used in the following description are explained.

The term "first control constant" is a control constant that corresponds to the first vehicle state value. In the present embodiment, the first control constant is a predetermined value and is held by the control constant holding unit 5.

The term "first vehicle state value" is a vehicle state value in which a corresponding control constant (first control constant) is already determined.

The term "first target characteristic" is a target characteristic in the first vehicle state value.

The term "second vehicle state value" is a vehicle state value different from the first vehicle state value.

The term "second control constant" is a control constant that corresponds to the second vehicle state value.

The term "second target characteristic" is a target characteristic in the second vehicle state value.

The term "intermediate vehicle state value" is a vehicle state value between the first vehicle state value and the second vehicle state value.

The term "intermediate control constant" is a control constant that corresponds to the intermediate vehicle state value.

The term "intermediate target characteristic" is a target characteristic in the intermediate vehicle state value.

Hereinafter, a case where the vehicle state value is the vehicle speed is explained as an example. In other words, the terms "first vehicle speed", "second vehicle speed", and "intermediate vehicle speed" each respectively correspond to the terms "first vehicle state value", "second vehicle state value", and "intermediate vehicle state value".

The control constant holding unit 5 holds the first control constant. The control constant calculation unit 6 calculates a second control constant based on the first control constant and the second target characteristic set by the target characteristic setting unit 4.

Here, the input/output device 3 sets the second control constant such that the control performance of the steering control device 2 does not deteriorate even in a case where the vehicle speed is transitioned. The second control constant is input to the setting unit 24 of the steering control device 2. The setting unit 24 may receive the second control constant output by the input/output device 3 via the in-vehicle communication network of the vehicle. Alternatively, the second control constant may be displayed on a monitor or the like, and the user of the input/output device 3 may manually input the displayed second control constant to the setting unit 24. The input/output device 3 may include a monitor or the like that displays the second control constant. Alternatively, the second control constant may be displayed on a terminal (laptop PC or the like) connected to the input/output device 3.

Next, an operation of the electric power steering device 50 is explained. In FIG. 1, a steering torque applied by the driver to the steering wheel 51 is transmitted to a torsion bar in the torque detection device 22 via the input shaft 53a. The steering torque is further transmitted to the rack and pinion gear 54. The rack included in the rack and pinion gear 54 is connected to the wheel 55 via a tie rod 56 and a knuckle arm 57. In a case where the driver operates the steering wheel 51, the tie rod 56 pushes the knuckle arm 57 in the wheel 55 of one side, and the tie rod 56 pulls the knuckle arm 57 in the wheel 55 on the opposite side. Accordingly, steering of the wheel 55 takes place.

The output torque of the rotation machine 1 is transmitted to the steering shaft 53. It is possible for the output torque of the rotation machine 1 to reduce the load associated with steering on the driver. The rotation machine 1 may be, for example, an alternating current motor such as a permanent magnet synchronous motor or an induction motor, or a direct current motor.

The power supply unit 25 calculates a current command corresponding to the output torque of the rotation machine 1 based on the steering torque signal Ts and the rotation speed signal $\omega$m. The power supply unit 25 generates a voltage command for controlling the current flowing to the rotation machine 1 based on the current command. The power supply unit 25 applies a voltage to the rotation machine 1 by a drive circuit (not shown) in accordance with a voltage command. In such manner, the rotation machine 1 is driven.

The power supply unit 25 includes a plurality of controllers (not shown) for calculating the above-described current command. These controllers are configured to satisfy aspects such as the steering feel, control stability, noise and disturbance resistance, and/or the like. More specifically, the control constant of each controller is appropriately set to satisfy the performance from the above-described aspects. In addition, each controller of the power supply unit 25 executes feedback control based on information detected by various detection devices. The term "various detection devices" may include vehicle speed detection device, a yaw rate detection device or the like, in addition to the torque detection device 22 and the rotation detection device 23. An example of a controller having such configuration disclosed in Japanese Unexamined Patent Application, First Publication No. 2002-29433 may be employed. Alternatively, the power supply unit 25 may calculate the current command using a controller that performs viscosity compensation.

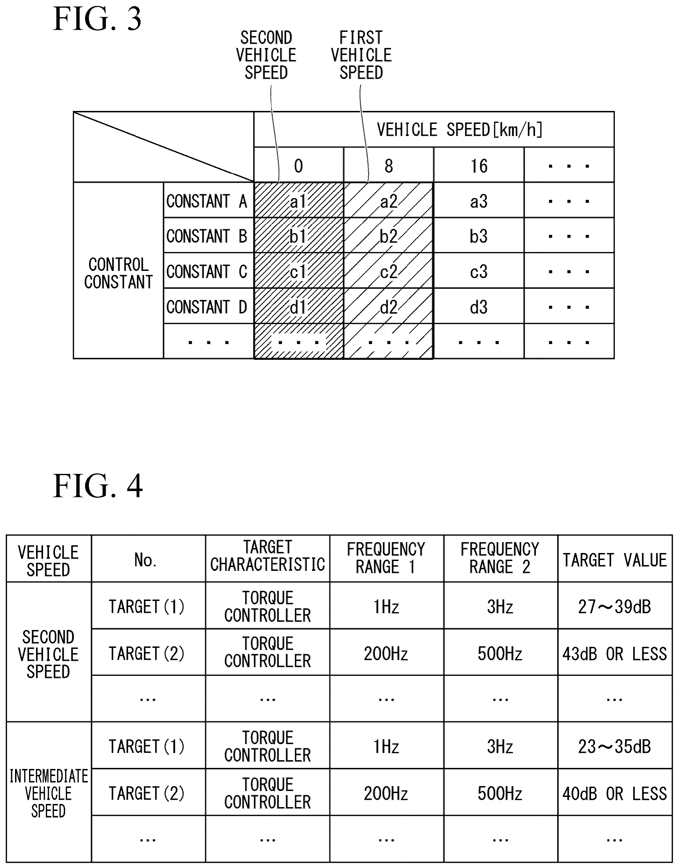

Hereinafter, examples of operations of the target characteristic setting unit 4, the control constant holding unit 5, and the control constant calculation unit 6 are explained with reference to FIGS. 3 and 4. In the present embodiment, each control constant is set for each vehicle speed as in the control constant matrix shown in FIG. 3. The term "control constant matrix" is a table showing a relationship between the control constant and the vehicle state value. In the example of FIG. 3, a2 to d2 are already determined as specific values of the control constants A to D at the vehicle speed of 8 km/h. In other words, the vehicle speed of 8 km/h is the "first vehicle speed", and a2 to d2 are the "first control constants". In addition, the values (in other words, a1 to d1) of the control constants A to D at the vehicle speed of 0 km/h are newly calculated by the control constant calculation unit 6. In other words, the vehicle speed of 0 km/h is the "second vehicle speed", and a1 to d1 are the "second control constants".

In FIG. 3, a vehicle speed greater than 0 km/h and less than 8 km/h is the "intermediate vehicle speed". For example, 1 km/h corresponds to an intermediate vehicle speed. A control constant (intermediate control constant) corresponding to the intermediate vehicle speed is not defined in the control constant matrix of FIG. 3. The intermediate control constant is calculated using interpolation based on the first control constant and the second control constant. The specific method of interpolation may be a method of linear interpolation or curve interpolation such as spline interpolation.

The first vehicle speed and the second vehicle speed in FIG. 3 are examples and may be changed. In addition, a plurality of first vehicle speeds may be set. Similarly, a plurality of second vehicle speeds and a plurality of intermediate vehicle speeds may be set.

The target characteristic setting unit 4 sets a target characteristic (second target characteristic) at the second vehicle speed and a target characteristic (intermediate target characteristic) at the intermediate vehicle speed. Specific examples of the "target characteristic" are as described above. The second target characteristic may be the same as or different from the target characteristic (first target characteristic) at the first vehicle speed. The intermediate target characteristic may be the same as or different from the first target characteristic. The control constant calculation unit 6 calculates the second control constant such that the second target characteristic and the intermediate target characteristic are realized.

FIG. 4 is an example of the target characteristic set by the target characteristic setting unit 4. In the example of FIG. 4, a target value (target characteristic) is set for the transmission characteristics of the torque controller. The torque controller is a part of the power supply unit 25 and controls the steering assist force generated by the rotation machine 1. The term "target value" in FIG. 4 is a gain representing a ratio of an output (steering assist force) to an input (steering torque). In the example of FIG. 4, a target value in a predetermined frequency band (from a frequency range 1 to a frequency range 2) is set for each of the second vehicle speed and the intermediate vehicle speed.

For example, in the target (1) for the second vehicle speed, the target value of the gain in the frequency band of 1 Hz to 3 Hz is set to 27 to 39 dB. In the example of FIG. 3, the intermediate vehicle speed is higher than the second vehicle speed because the second vehicle speed is 0 km/h. As the vehicle speed increases, the force required for steering tends to decrease. Therefore, as the vehicle speed increases, the steering feel of the user is less likely to change depending on the vehicle speed by reducing the steering assist force (in other words, the gain) with respect to the steering torque. Therefore, in the example of FIG. 4, the target value of the gain at the intermediate vehicle speed is set to be smaller than the target value of the gain at the second vehicle speed in a case of comparison in the same frequency band. It should be noted that FIG. 4 is merely an example, and the "target characteristic" which is set may be performance of suppressing the disturbance vibration, stability, or the like.

Next, the control constant holding unit 5 is explained. In the example shown in FIG. 3, values (a2 to d2) of the first control constants corresponding to the first vehicle speed (8 km/h) are predetermined and are held by the control constant holding unit 5. Here, the value of the first control constant may be determined such that the first target characteristic is satisfied by experimentally performing steering at the first vehicle speed. Alternatively, the first control constant may be derived in advance by another method such that the first target characteristic is satisfied. The control constant holding unit 5 outputs a value of the first control constant to the control constant calculation unit 6.

Next, the control constant calculation unit 6 is explained. As described above, the power supply unit 25 includes a plurality of controllers. The degrees of freedom of these controllers are large, and there are many control constants to be set. Therefore, the control constant calculation unit 6 calculates the control constant for realizing the desired target characteristic by the optimization calculation. As the optimization calculation method, a post-rebound method, a genetic algorithm, or the like may be employed. For example, in a case where a particle swarm optimization (PSO) method, which is a kind of genetic algorithm, is used, it is possible to reach global optimization.

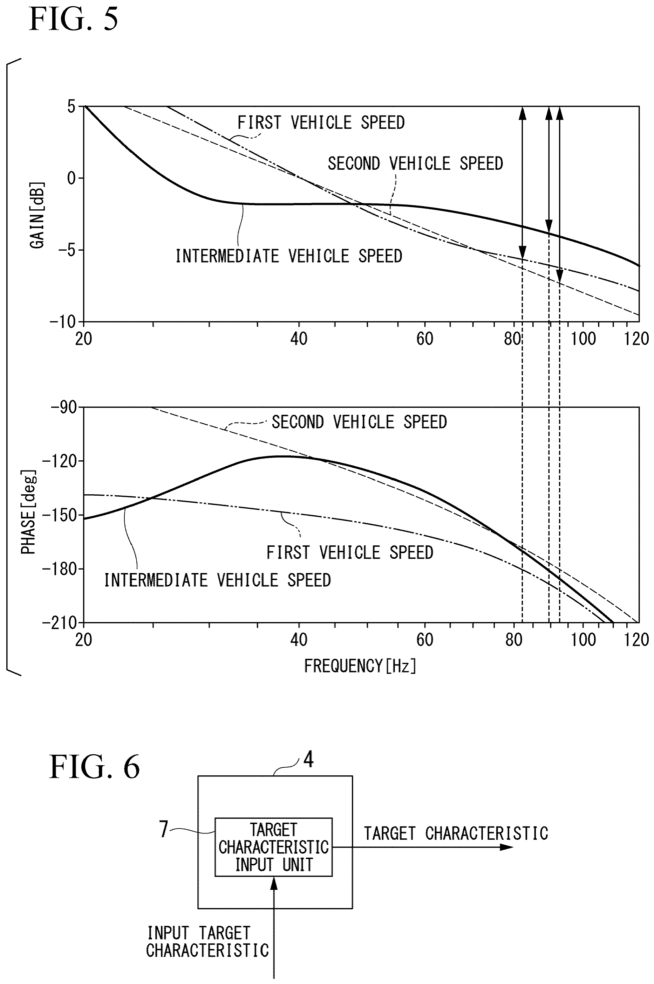

As described above, the control constant at the intermediate vehicle speed is calculated using interpolation. Here, the control characteristic obtained by using the control constant at the intermediate vehicle speed is not necessarily a result of interpolation between the control characteristic at the first vehicle speed and the control characteristic at the second vehicle speed. In other words, even in a case where the desired control characteristics are obtained at the first vehicle speed and the second vehicle speed, the desired control characteristics may not be obtained at the intermediate vehicle speed. An example of the above is shown in FIG. 5.

FIG. 5 is a board diagram showing a one-turn transmission characteristic calculated from a characteristic of the torque controller and a mechanical characteristic of the steering. Specifically, the aforementioned is an example in which the second control constant is determined to satisfy the target characteristic of the second vehicle speed without considering the control characteristic of the intermediate vehicle speed and the control constant of the first vehicle speed. In addition, the control constant at the intermediate vehicle speed is determined using interpolation between the first control constant and the second control constant. In FIG. 5, the gain margin at the first vehicle speed and the gain margin at the second vehicle speed are sufficiently secured. However, the gain margin is smaller for the intermediate vehicle speed than for the first vehicle speed and the second vehicle speed.

In other words, in FIG. 5, the gain margin at the intermediate vehicle speed is not the result of interpolation between the gain margins at the first vehicle speed and the second vehicle speed. The small gain margin means that the stability of the control is decreased. In a case where the stability of the control is reduced, for example, the steering feel may be reduced. In the example of FIG. 5, the steering feel at the intermediate vehicle speed may be lower than the steering feel at the first vehicle speed and the second vehicle speed.

Therefore, in the present embodiment, the second control constant is determined by optimization search such that the target characteristic is obtained in both the second vehicle speed and the intermediate vehicle speed in which the control constant is calculated using interpolation. As a result, it is possible to avoid deterioration of the control performance with the transition of the vehicle speed.

As shown in FIG. 6, the target characteristic setting unit 4 may include a target characteristic input unit 7. The target characteristic input unit 7 is an interface for the operator to input the target characteristic. Specific examples of such an interface include a touch panel type display, a keyboard, and a mouse. In the example of FIG. 4, the target characteristic is displayed in the format of a table on the interface (target characteristic input unit 7). For example, the user may select a cell shown in the table in FIG. 4 and edit the numerical value of the cell. As a result, tuning of the target characteristic is facilitated. The target characteristic set through the target characteristic input unit 7 is output to the control constant calculation unit 6 as shown in FIG. 2.

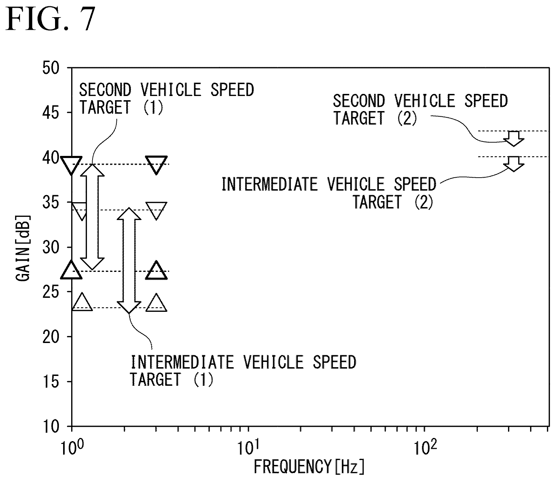

A modification example of FIG. 4 is shown in FIG. 7. FIG. 7 is an example in which the target characteristic is displayed in a format of a map in which the horizontal axis represents frequency and the vertical axis represents gain. According to the format of the map, it is possible for the operator to more visually grasp the target characteristic. For example, the input/output device 3 may include a display that displays a map as shown in FIG. 7. The target characteristic input unit 7 serving as an interface may be used such that it is possible for the operator to operate the cursor position, the numerical value, or the like on the map.

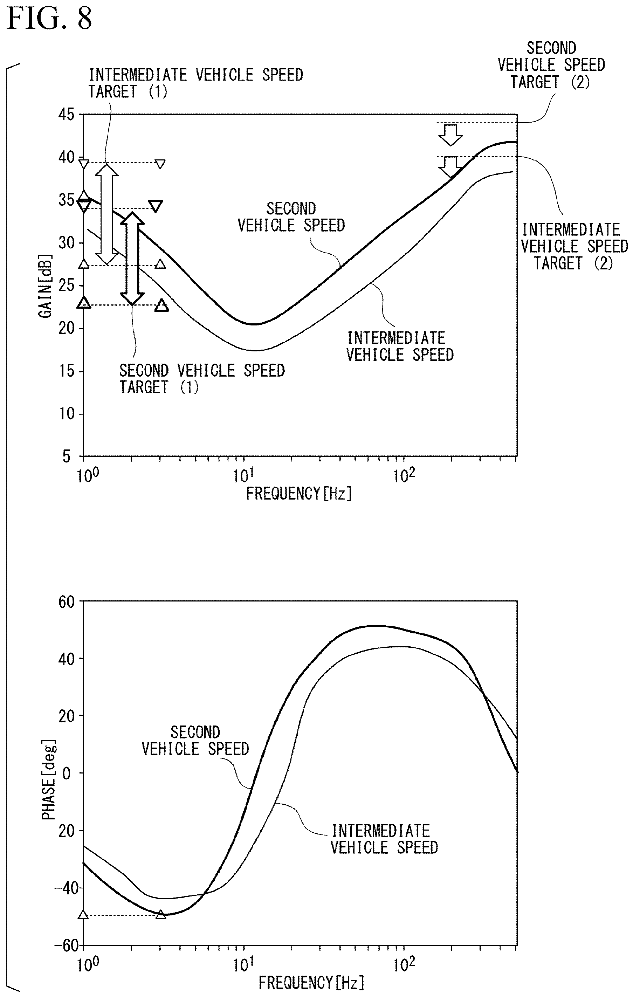

FIG. 8 shows a modification example of FIG. 7. As described above, in the present embodiment, the target characteristic is set for the second vehicle speed and the intermediate vehicle speed. The control constant calculation unit 6 calculates the control constant at the second vehicle speed by optimization calculation to satisfy the set target characteristic. The input/output device 3 calculates the control characteristics at the second speed and the intermediate speed by using the second control constant obtained in such manner and the control constant at the intermediate vehicle speed obtained using interpolation. The calculated control characteristics may be displayed on the display together with the target characteristic as shown in FIG. 8. As a result, it is possible for the operator to visually confirm whether or not the target characteristic is satisfied for each vehicle speed.

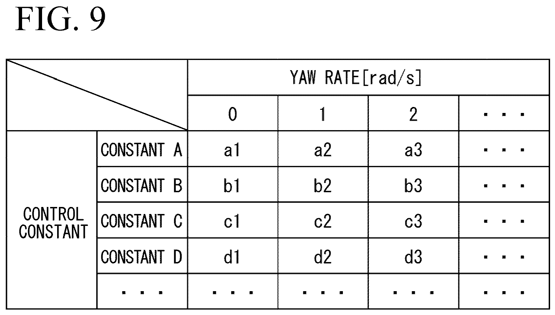

In the present embodiment, a case where the vehicle state value is the vehicle speed is explained above. However, the vehicle state value may not be the vehicle speed. As a specific example, the vehicle state value may be a parameter (lateral acceleration, steering rotation speed, yaw rate, or the like) indicating a behavior in the lateral direction of the vehicle. In the example of FIG. 9, the values of the control constants A to D are set for each value of the yaw rate. For example, the yaw rate of 0 rad/s may be set as the first vehicle state value, the yaw rate of 2 rad/s may be set as the second vehicle state value, and the yaw rate of 1 rad/s may be set as the intermediate vehicle state value.

In such case, the values of the control constants a1 to d1 at the yaw rate of 0 rad/s are the predetermined "first control constants", and are held in the control constant holding unit 5. Then, the second control constants (a3 to d3) are calculated such that the target characteristics are obtained at both the yaw rate of 2 rad/s (the second vehicle state value) and the yaw rate of 1 rad/s (the intermediate vehicle state value). As described above, the control constants (a2 to d2) in the intermediate vehicle state value are calculated using interpolation between the first control constant and the second control constant.

In the present embodiment, the electric power steering that assists the steering force is explained above as an example. However, the present disclosure may also be applied to control in a case of generating a steering reaction force to provide steering feel to the driver, such as in steer by wire (SBW).

As explained above, the input/output device 3 according to the present embodiment sets the control constants (the first control constant, the second control constant, and the intermediate control constant) corresponding to the plurality of vehicle state values (the first vehicle state value, the second vehicle state value, and the intermediate vehicle state value) for the steering control device 2 that controls the steering mounted on the vehicle. The input/output device 3 includes: the control constant holding unit 5 that holds a first control constant corresponding to a first vehicle state value; the target characteristic setting unit 4 that sets a second target characteristic which is a target value of a control characteristic of the steering in the second vehicle state value different from the first vehicle state value; and the control constant calculation unit 6 that calculates the second control constant corresponding to the second vehicle state value based on the first control constant and the second target characteristic and outputs the second control constant to the steering control device 2.

With the input/output device 3, the second control constant calculated to satisfy the second target characteristic is output to the steering control device 2. Therefore, it is not necessary for the operator to adjust the second control constant during trial and error as in the related art. As a result, it is possible to obtain an effect of reducing the required number of man-hours for setting the control constant that takes the transition of the vehicle state value into consideration.

In addition, the target characteristic setting unit 4 may set an intermediate target characteristic corresponding to an intermediate vehicle state value between the first vehicle state value and the second vehicle state value. According to the aforementioned configuration, the second control constant may be set such that the target characteristic is satisfied even in the intermediate vehicle state value. Therefore, it is possible to obtain an effect of avoiding a decrease in control performance due to the transition of the vehicle state value.

In addition, the target characteristic setting unit 4 may include the target characteristic input unit 7 for inputting the target characteristic from the outside of the input/output device 3. According to the aforementioned configuration, for example, it is possible for the operator to manually input the target characteristic. Therefore, it is possible to easily set the target characteristic for the specific vehicle state value, and it is possible to reduce the number of man-hours for adjustment. The "outside of the input/output device 3" also includes, for example, a management device that is connected to the input/output device 3 in a wired or wireless manner. In other words, a configuration in which the target characteristic is input to the target characteristic input unit 7 by the management device may be employed.

In addition, the vehicle state value may be vehicle speed. In such case, it is possible to reduce the number of man-hours of adjusting the control constant for each vehicle speed. Alternatively, it is possible to avoid a decrease in control performance associated with a transition of the vehicle speed.

Second Embodiment

Next, an input/output device according to a second embodiment is explained. Since the basic configuration of the input/output device according to the present embodiment is the same as the configuration of the first embodiment, explanations below center on points of difference. The target characteristic setting unit 4 according to the present embodiment sets the intermediate target characteristic using interpolation based on the second target characteristic and the control characteristic corresponding to the first vehicle state value.

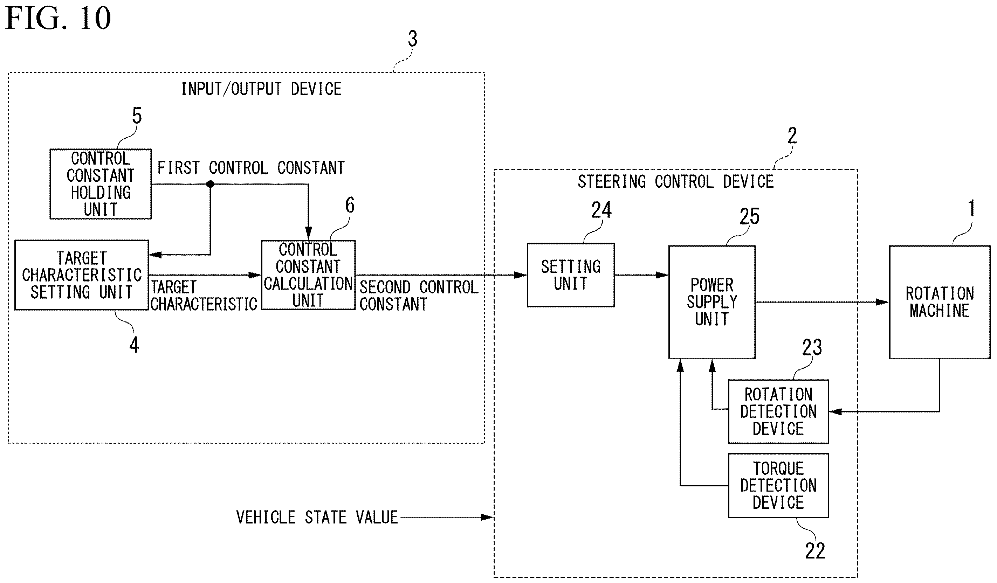

FIG. 10 is a schematic diagram showing a configuration of the input/output device 3 according to the second embodiment. As shown in FIG. 10, the control constant holding unit 5 in the present embodiment inputs the first control constant to the target characteristic setting unit 4. The target characteristic setting unit 4 sets the second target characteristic. The second target characteristic may be determined in advance depending on a vehicle type, know-how, or the like. Further, the target characteristic setting unit 4 calculates the control characteristic obtained by the first control constant as a "first control characteristic".

Here, the target characteristic setting unit 4 calculates the target characteristic (intermediate target characteristic) of the intermediate vehicle state value using interpolation using the "first control characteristic" and the "second target characteristic". A specific interpolation method may be linear interpolation or curve interpolation such as spline interpolation. The "intermediate vehicle state value" may be any value between the first vehicle state value and the second vehicle state value. For example, an average of the first vehicle state value and the second vehicle state value may be used as the intermediate vehicle state value. In addition, there may be a plurality of intermediate vehicle state values.

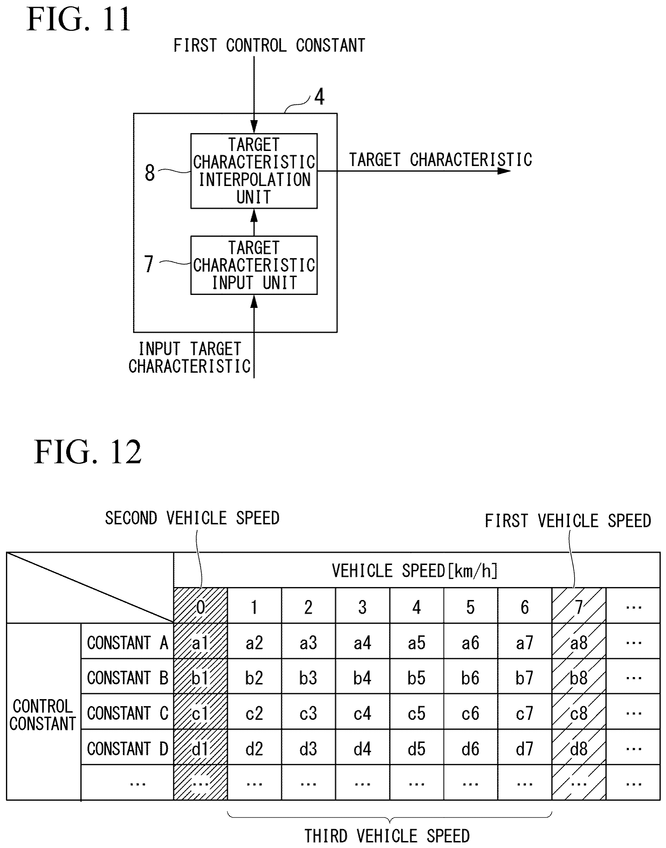

As shown in FIG. 11, the target characteristic setting unit 4 may include a target characteristic interpolation unit 8 in addition to the target characteristic input unit 7 described above. In such case, the target characteristic interpolation unit 8 calculates the intermediate target characteristic by interpolating the second target characteristic input to the target characteristic input unit 7 and the first control characteristic.

As a modification example of the second embodiment, the first target characteristic may be determined in advance before the first control constant is determined. In such case, the first control constant may be determined to satisfy the first target characteristic. The target characteristic setting unit 4 may calculate the intermediate target characteristic using interpolation using the "first target characteristic" and the "second target characteristic". In such case, in FIG. 11, the target characteristic interpolation unit 8 calculates the target characteristic in the intermediate vehicle state value by interpolating the second target characteristic and the first target characteristic input to the target characteristic input unit 7.

In the present embodiment, as in the first embodiment, the vehicle state value may be the vehicle speed. Alternatively, the vehicle state value may be a parameter (lateral acceleration, steering rotation speed, yaw rate, or the like) related to the behavior in the lateral direction of the vehicle.

As explained above, in the present embodiment, the target characteristic setting unit 4 sets the intermediate target characteristic by interpolating the second target characteristic and the control characteristic corresponding to the first vehicle state value. Alternatively, the target characteristic setting unit 4 sets the intermediate target characteristic by interpolating the second target characteristic and the first target characteristic.

According to the aforementioned configuration, since the intermediate target characteristic is set using interpolation, it is possible to reduce the number of man-hours of the operator. It is also possible to suppress a decrease in control performance of the intermediate vehicle state value with the transition of the vehicle state value.

Third Embodiment

Next, an input/output device according to a third embodiment is explained. Since the basic configuration of the input/output device according to the present embodiment is the same as that of the first embodiment, explanations below center on points of difference. In the present embodiment, an example in which the vehicle state value in the control constant matrix calculated by the control constant calculation unit 6 is set is described in more detail. The increment width of the vehicle state value in the control constant matrix may be the same as a resolution that may be detected by the detection device of the vehicle state value. For example, a case where the vehicle state value is the vehicle speed and the resolution that may be detected by the vehicle speed detection device is 1 km/h is considered. In such case, in the control constant matrix, the control constant may be set for each 1 km/h of the vehicle speed. A specific example of such a control constant matrix is shown in FIG. 12.

In the example of FIG. 12, the "first vehicle speed" is 7 km/h, and the "second vehicle speed" is 0 km/h. In other words, the values of the control constants a8 to d8 at the vehicle speed of 7 km/h are predetermined and are held by the control constant holding unit 5. The control constants a1 to d1 (second control constants) at 0 km/h are calculated by the control constant calculation unit 6. The control constant at 1 to 6 km/h, which is the "intermediate vehicle speed", is obtained using interpolation. The second control constant is subjected to optimization calculation such that the target characteristic is satisfied at both the second vehicle speed and the intermediate vehicle speed.

Here, "the target characteristic is satisfied" means that the control characteristic of the entire control system in which a plurality of controllers are combined is in a preferable state. However, when an individual controller is focused on, there are cases where the characteristic may greatly change, depending on the vehicle state value. For example, in FIG. 12, even in a case where the target characteristic is satisfied at both the vehicle speeds of 2 km/h and 3 km/h, there is a possibility that the control constants a3 and a4 are significantly different from each other. In a case where the change gradient of the control constant is large as described above, a sharp fluctuation in the output of the single controller may occur with the transition of the vehicle state value, and the control performance may deteriorate. In particular, as the vehicle state value is set in more detail in the control constant matrix, such a problem is likely to occur.

Therefore, in the present embodiment, when the second control constant is calculated, a condition for the optimization calculation is set such that the second control constant does not significantly fluctuate from the first control constant. For example, in FIG. 12, a case where the control constant a1 of the second vehicle speed is calculated based on the control constant a8 of the first vehicle speed is explained. In such case, the following Conditional Expression (1) is set when the optimization calculation is performed. In Conditional Expression (1), X1 is a lower fluctuation limit value, and X2 is an upper fluctuation limit value. Both X1 and X2 are positive numbers.

$$a8 - X1 < a1 < a8 + X2 \dots (1)$$

Alternatively, when the optimization calculation is performed, the following Conditional Expression (2) may be set. In Conditional Expression (2), X3 is a lower side fluctuation limit magnification, and X4 is an upper side fluctuation limit magnification. X3 and X4 are both positive numbers.

$$a8 \times X3 < a1 < a8 \times X4 \dots (2)$$

Alternatively, instead of Conditional Expressions (1) and (2), a method may be used in which optimization calculation is performed with the reduction of the difference between a1 and a8 as one of the target values.

As described above, by calculating the second control constant so that the second control constant does not significantly fluctuate from the first control constant, it is possible to suppress the deterioration of the control performance associated with the transition of the vehicle state value.

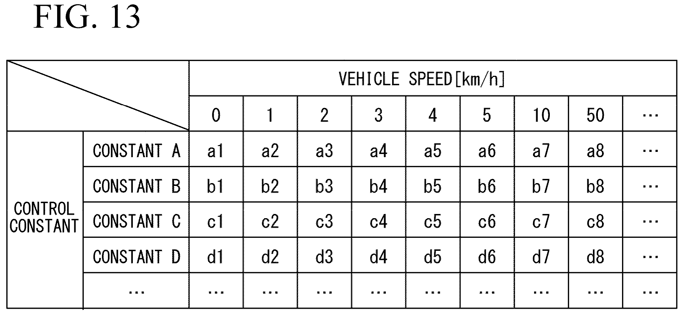

A control constant matrix according to a modification example of the present embodiment is shown in FIG. 13. In the example of FIG. 13, the increment width of the vehicle state value in the control constant matrix changes according to the magnitude of the vehicle state value. Specifically, in a case where the vehicle speed is in the range of 0 km/h to 5 km/h, the increment width of the vehicle speed is 1 km/h. In the range where the vehicle speed is greater than 5 km/h, the larger the vehicle speed, the larger the increment width.

In the example of FIG. 13, since the increment width of the vehicle speed is small in the range of 0 km/h to 5 km/h, a decrease in control performance is likely to occur with the transition of the vehicle state value. Therefore, in the range of 0 km/h to 5 km/h, it is possible to "calculate the second control constant so that the second control constant does not fluctuate significantly from the first control constant". In addition, in the range in which the vehicle speed exceeds 5 km/h, it is possible not to "calculate the second control constant such that the first control constant does not fluctuate significantly". According to such configuration, it is possible to relax the condition when the second control constant is obtained by the optimization calculation. Therefore, it is possible to reduce the calculation load in the input/output device 3.

In addition, in the present embodiment, the vehicle speed is explained as the vehicle state value. However, the vehicle state value may be a parameter related to the behavior in the lateral direction of the vehicle as explained in the first embodiment.

Fourth Embodiment

In the present embodiment, a method for manufacturing a vehicle and a program, which are related to the input/output device explained in the first to the third embodiments above is explained.

The input/output device 3 explained in any one of the first to third embodiments may be used, for example, in a manufacturing line of a vehicle. During vehicle manufacturing, after setting items common to each vehicle are set, setting items that differ depending on the destination of the vehicle may be set. The term "setting items" includes various control constants described above. The term "destination" includes a country or region to which the vehicle is shipped, or the purpose of using the vehicle (general use, business use, sports use, or the like). A steering feel required by the driver may vary depending on the destination of the vehicle. In addition, a difference in steering feel occurs due to a difference in the control constant. Therefore, by varying the control constant depending on the destination, it is possible to provide a good steering feel to more drivers.

As explained in the first to third embodiments above, the control constant calculation unit 6 calculates the second control constant such that the target characteristic is obtained in both the second vehicle state value and the intermediate vehicle state value. By setting a different target characteristic depending on the destination, an appropriate second control constant depending on the destination is calculated.

Therefore, the method for manufacturing a vehicle according to the present embodiment includes a step of inputting the second control constant to the steering control device 2 of the vehicle by using the input/output device 3 explained in the first to the third embodiment. According to such a manufacturing method, it is possible to realize an appropriate steering feel depending on the destination. Further, it is not necessary for the operator to perform work of adjusting the second control constant by going through trial and error. In other words, it is possible to obtain an effect of achieving both appropriate adjustment according to the destination of the vehicle, and reduction in the number of man-hours for adjustment.

The input/output device 3 according to any one of the first to third embodiments may be used not only during vehicle manufacturing but also, for example, during vehicle maintenance. In other words, the control constant may be set by using the input/output device 3 while the vehicle is being maintained. The maintenance may be performed by bringing the vehicle to a maintenance shop. Alternatively, the maintenance may be performed in response to a request from the user or the like while the vehicle is stopped. In such case, it is preferable to connect the vehicle and the input/output device 3 by wireless communication to update the control constant.

The functions of the steering control device 2 and the input/output device 3 explained above are realized by, for example, a processor such as a central processing unit (CPU) executing a program stored in a program memory. Some or all of these functions may be realized by hardware such as large scale integration (LSI), application specific integrated circuit (ASIC), or field-programmable gate array (FPGA), or may be realized by a collaboration of software and hardware.

The program for realizing the functions of the steering control device 2 and the input/output device 3 described above is recorded on, for example, a computer-readable recording medium. The processing in the steering control device 2 and the input/output device 3 described above may be performed by reading and executing a program recorded on the recording medium, on the computer. Here, "causing a computer to read and execute the program recorded on such recording medium" includes installing the program on the computer. The term "computer" mentioned here includes hardware such as an OS and a peripheral device.

In addition, the "computer" may include a plurality of computer devices connected via a network including a communication line such as the Internet, a WAN, a LAN, and/or a dedicated line. In addition, the term "computer-readable recording medium" refers to a storage device, for example, a portable medium such as a flexible disk, a magneto-optical disk, a ROM, or a CD-ROM, and/or a hard disk built in a computer. In such manner, the recording medium on which the program is stored may be a non-transitory recording medium such as a CD-ROM.

The recording medium also includes an internal or external recording medium that is accessible by a distribution server for distributing the program. The programs may be divided into a plurality of programs, and the programs may be downloaded at different timings and then combined in the steering control device 2 and the input/output device 3. The distribution servers that distribute each of the divided programs may be different from one another.

The term "computer-readable recording medium" includes a medium that holds the program for a certain period of time, such as a volatile memory (RAM) inside the computer that serves as a server or a client in a case where the program is transmitted via a network. The program described above may be a program for realizing some of the functions described above. The program described above may be a so-called difference file (difference program). The difference program realizes the functions described above in combination with a program already recorded on the computer.

A program according to the present embodiment causes a computer to execute a step of holding a first control constant corresponding to a first vehicle state value, a step of setting a second target characteristic which is a target value of a control characteristic of steering in a second vehicle state value different from the first vehicle state value, a step of calculating a second control constant corresponding to the second vehicle state value based on the first control constant and the second target characteristic, and a step of outputting the second control constant. With such program, it is possible to obtain an effect of achieving both appropriate adjustment according to the destination of the vehicle and reduction in the number of man-hours for adjustment.

The technical scope of the present disclosure is not limited to the embodiment described above, and various modifications may be made without departing from the scope of the present disclosure. The above-described embodiments or modification examples may be appropriately combined.

Reference Signs List

2...Steering control device, 3...Input/output device, 4...Target characteristic setting unit, 5...Control constant holding unit, 6...Control constant calculation unit, 7...Target characteristic input unit

## Claims

1. An input/output device for setting a control constant corresponding to a plurality of vehicle state values of a steering control device that controls a steering mounted on a vehicle, the input/output device comprising:

   a control constant holding unit configured to hold a first control constant corresponding to a first vehicle state value;
   a target characteristic setting unit configured to set a second target characteristic which is a target value of a control characteristic of the steering in a second vehicle state value different from the first vehicle state value; and
   a control constant calculation unit configured to calculate a second control constant corresponding to the second vehicle state value based on the first control constant and the second target characteristic, and to output the second control constant to the steering control device.

2. The input/output device according to Claim 1, wherein
   the target characteristic setting unit sets an intermediate target characteristic corresponding to an intermediate vehicle state value between the first vehicle state value and the second vehicle state value.

3. The input/output device according to Claim 2, wherein
   the target characteristic setting unit sets the intermediate target characteristic using interpolation between the second target characteristic and a control characteristic corresponding to the first vehicle state value.

4. The input/output device according to Claim 2, wherein
   the target characteristic setting unit sets the intermediate target characteristic using interpolation between the second target characteristic and a first target characteristic in the first vehicle state value.

5. The input/output device according to any one of Claims 1 to 4, wherein
   the target characteristic setting unit includes a target characteristic input unit for inputting the target characteristic from an outside of the input/output device.

6. The input/output device according to any one of Claims 1 to 5, wherein
   the vehicle state value is vehicle speed.

7. The input/output device according to any one of Claims 1 to 5, wherein

the vehicle state value is a parameter related to a behavior in a lateral direction of the vehicle.

8. A method for manufacturing a vehicle, comprising:
a step of inputting the second control constant to the steering control device using the input/output device according to any one of Claims 1 to 7.

9. A program causing a computer to execute:

a step of holding a first control constant corresponding to a first vehicle state value;
a step of setting a second target characteristic which is a target value of a control characteristic of steering in a second vehicle state value different from the first vehicle state value;
a step of calculating a second control constant corresponding to the second vehicle state value based on the first control constant and the second target characteristic; and
a step of outputting the second control constant.

FIG. 1

ELECTRIC POWER STEERING DEVICE

50

51
53a
22
53
57
3
2
1
23
53b
55
54
56

INPUT/
OUTPUT
DEVICE

STEERING
CONTROL
DEVICE

FIG. 2

EP 4 722 079 A1

# FIG. 3

|  |  | SECOND VEHICLE SPEED | FIRST VEHICLE SPEED |  |  |
|---|---|---|---|---|---|
|  |  | VEHICLE SPEED[km/h] | | | |
|  |  | 0 | 8 | 16 | · · · |
| CONTROL CONSTANT | CONSTANT A | a1 | a2 | a3 | · · · |
|  | CONSTANT B | b1 | b2 | b3 | · · · |
|  | CONSTANT C | c1 | c2 | c3 | · · · |
|  | CONSTANT D | d1 | d2 | d3 | · · · |
|  | · · · | · · · | · · · | · · · | · · · |

# FIG. 4

| VEHICLE SPEED | No. | TARGET CHARACTERISTIC | FREQUENCY RANGE 1 | FREQUENCY RANGE 2 | TARGET VALUE |
|---|---|---|---|---|---|
| SECOND VEHICLE SPEED | TARGET (1) | TORQUE CONTROLLER | 1Hz | 3Hz | 27~39dB |
|  | TARGET (2) | TORQUE CONTROLLER | 200Hz | 500Hz | 43dB OR LESS |
|  | ... | ... | ... | ... | ... |
| INTERMEDIATE VEHICLE SPEED | TARGET (1) | TORQUE CONTROLLER | 1Hz | 3Hz | 23~35dB |
|  | TARGET (2) | TORQUE CONTROLLER | 200Hz | 500Hz | 40dB OR LESS |
|  | ... | ... | ... | ... | ... |

FIG. 5

FIG. 6

# FIG. 7

# FIG. 8

INTERMEDIATE VEHICLE SPEED TARGET (1)

SECOND VEHICLE SPEED TARGET (2)

SECOND VEHICLE SPEED

INTERMEDIATE VEHICLE SPEED TARGET (2)

SECOND VEHICLE SPEED TARGET (1)

INTERMEDIATE VEHICLE SPEED

SECOND VEHICLE SPEED

INTERMEDIATE VEHICLE SPEED

FIG. 9

|  | | YAW RATE[rad/s] | | | |
|---|---|---|---|---|---|
|  | | 0 | 1 | 2 | · · · |
| CONTROL CONSTANT | CONSTANT A | a1 | a2 | a3 | · · · |
| | CONSTANT B | b1 | b2 | b3 | · · · |
| | CONSTANT C | c1 | c2 | c3 | · · · |
| | CONSTANT D | d1 | d2 | d3 | · · · |
| | · · · | · · · | · · · | · · · | · · · |

FIG. 10

# FIG. 11

FIRST CONTROL CONSTANT

```
        ┌──────────────────┐ ╱─ 4
        │   ┌──────────────┐
        │   │    TARGET     │
        │ 8 │ CHARACTERISTIC │──────→ TARGET CHARACTERISTIC
        │   │ INTERPOLATION │
        │   │     UNIT      │
        │   └──────────────┘
        │          ↑
        │   ┌──────────────┐
        │ 7 │    TARGET     │
        │   │ CHARACTERISTIC │
        │   │  INPUT UNIT   │
        │   └──────────────┘
        │          ↑
        └──────────────────┘
```

INPUT TARGET
CHARACTERISTIC

# FIG. 12

| | | VEHICLE SPEED [km/h] | | | | | | | | |
|---|---|---|---|---|---|---|---|---|---|---|
| | | 0 | 1 | 2 | 3 | 4 | 5 | 6 | 7 | ... |
| CONTROL CONSTANT | CONSTANT A | a1 | a2 | a3 | a4 | a5 | a6 | a7 | a8 | ... |
| | CONSTANT B | b1 | b2 | b3 | b4 | b5 | b6 | b7 | b8 | ... |
| | CONSTANT C | c1 | c2 | c3 | c4 | c5 | c6 | c7 | c8 | ... |
| | CONSTANT D | d1 | d2 | d3 | d4 | d5 | d6 | d7 | d8 | ... |
| | ... | ... | ... | ... | ... | ... | ... | ... | ... | ... |

SECOND VEHICLE SPEED

FIRST VEHICLE SPEED

THIRD VEHICLE SPEED

FIG. 13

| | | VEHICLE SPEED[km/h] | | | | | | | | |
|---|---|---|---|---|---|---|---|---|---|---|
| | | 0 | 1 | 2 | 3 | 4 | 5 | 10 | 50 | ⋯ |
| CONTROL CONSTANT | CONSTANT A | a1 | a2 | a3 | a4 | a5 | a6 | a7 | a8 | ⋯ |
| | CONSTANT B | b1 | b2 | b3 | b4 | b5 | b6 | b7 | b8 | ⋯ |
| | CONSTANT C | c1 | c2 | c3 | c4 | c5 | c6 | c7 | c8 | ⋯ |
| | CONSTANT D | d1 | d2 | d3 | d4 | d5 | d6 | d7 | d8 | ⋯ |
| | ⋯ | ⋯ | ⋯ | ⋯ | ⋯ | ⋯ | ⋯ | ⋯ | ⋯ | ⋯ |

# INTERNATIONAL SEARCH REPORT

| International application No. |
| --- |
| **PCT/JP2023/019434** |

**A.     CLASSIFICATION OF SUBJECT MATTER**

*B62D 6/00*(2006.01)i; *B62D 5/04*(2006.01)i; *B62D 101/00*(2006.01)n; *B62D 111/00*(2006.01)n
FI:   B62D6/00; B62D5/04; B62D101:00; B62D111:00

According to International Patent Classification (IPC) or to both national classification and IPC

**B.     FIELDS SEARCHED**

Minimum documentation searched (classification system followed by classification symbols)

B62D6/00; B62D5/04; B62D101/00; B62D111/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
| --- | --- | --- |
| A | JP 2001-273001 A (TOYODA KOKI KABUSHIKI KAISHA) 06 October 2001 (2001-10-06) paragraphs [0026]-[0034], fig. 1-3 | 1-9 |
| A | JP 2022-149717 A (TOYOTA JIDOSHA KABUSHIKI KAISHA) 07 October 2022 (2022-10-07) paragraphs [0015]-[0054], fig. 1-7 | 1-9 |
| A | JP 2017-43246 A (FUJI HEAVY INDUSTRIES LTD.) 02 March 2017 (2017-03-02) paragraphs [0026]-[0035], fig. 1-4 | 1-9 |
| A | JP 2000-95132 A (NSK LTD.) 04 April 2000 (2000-04-04) paragraphs [0002]-[0005], fig. 9-10 | 1-9 |
| A | JP 2022-170402 A (KUBOTA CORPORATION) 10 November 2022 (2022-11-10) paragraphs [0021]-[0055], fig. 1-10 | 1-9 |

|☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **31 July 2023** | **08 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/019434**

| Patent document cited in search report | | | Publication date (day/month/year) | Patent family member(s) | Publication date (day/month/year) |
|---|---|---|---|---|---|
| JP | 2001-273001 | A | 06 October 2001 | (Family: none) | |
| JP | 2022-149717 | A | 07 October 2022 | (Family: none) | |
| JP | 2017-43246 | A | 02 March 2017 | US 2017/0057540 A1 paragraphs [0053]-[0062], fig. 1-4 DE 102016115662 A1 CN 106476798 A | |
| JP | 2000-95132 | A | 04 April 2000 | US 6240350 B1 column 1, line 15 to column 2, line 19, fig. 1-2 DE 19934686 A1 | |
| JP | 2022-170402 | A | 10 November 2022 | US 2022/0348189 A1 paragraphs [0055]-[0088], fig. 1-10 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008210291 A

- JP 2002029433 A